# EUROPEAN PATENT APPLICATION

(11) **EP 4 265 118 A1**
(43) Date of publication of application: **25.10.2023**
(21) Application number: 23169154.4
(22) Date of filing: 21.04.2023
(51) Int. Cl.: A23C 13/16, A23C 13/14

(54) **METHOD FOR PREPARING SOUR CREAM AND OBTAINED SOUR CREAM**

(30) Priority: 22.04.2022 BE 202205302
(71) Applicant: Inex nv, 9520 Bavegem (Sint-Lievens-Houtem (BE)
(72) Inventor: GEEROMS, Johan, 9520 Bavegem (Sint-Lievens-Houtem) (BE)
(74) Representative: Brantsandpatents bv

(57) **Abstract**

A method for preparing sour cream comprising a predetermined fat content between 9 and 16 m%, comprising the steps of: providing a pasteurized cream fraction, a pasteurized milk fraction and a milk protein source, mixing the cream fraction with the milk fraction and the milk protein source until a predetermined fat content or protein content are reached, homogenizing the product, pasteurizing the product, cooling the product, inoculating and fermenting a starter culture into the product, obtaining sour cream with a predetermined fat content, and thermizing the sour cream at a temperature comprised between 38 and 68°C. The invention also relates to sour cream obtained according to the above-mentioned method.

## Description

### TECHNICAL FIELD

The invention relates to a method for manufacturing sour cream. More specifically, the invention relates to a method for manufacturing clean label low-fat sour cream.

### PRIOR ART

Sour cream is a traditional consumer product, often with a fat content of 30 m%. However, the demand for reduced-fat products is increasing, as a result of which more and more "light" products are coming onto the market. These light products are usually thickened with E numbers and stabilized, which is not desirable for all consumers.

Sour cream is prepared by acidifying highly pasteurized homogenized cream with a specific type of butter starter. The thickening in the cream then comes from both the acidification and the crystallization of the fat present. There is a great demand in the market for lower fat variants, but because the thickness due to the crystallization of the fat is much lower, thickeners are often added. The thickeners are often E numbers, which are undesirable for consumers.

A method for the preparation of sour cream is known from WO2017105285 but is not aimed at obtaining sour cream with a reduced fat content.

WO2016164096 provides a method for the preparation of a fermented milk product with a high protein content, such as high protein yoghurt, Greek yoghurt, Labneh or sour cream, in which a microorganism and an exogenous protease are applied to a milk substrate with a protein content of at least 6.5% or more. The disadvantage of such methods, however, is that protein coagulation occurs after fermentation, resulting in clot formation. This will result in a product with chunks.

Furthermore, the residual flora present from the fermentation remains metabolically active. The intermediate metabolites can occur in varying amounts herein and, in the case of a molecule with a clear taste, can also have a strong influence on the taste. In addition, the cultures added at inoculation are not all equally resistant to longer storage in the rather acidic conditions, so that they become metabolically inactive (or die), allowing a number of metabolites to accumulate. Microbial contamination is slowly but surely increased during cold storage, with various adverse effects: discoloration, odor development, taste development, gas formation and development of undesirable substances (e.g. toxins). A common example of this is the occurrence of surface mold growth, which typically begins around surface condensate formation. To combat some effects (especially mold growth) a mold inhibitor (sorbates or benzoic acid) is often used, but consumers no longer want to see these products in their products.

There is a need for an improved method for preparing a clean label low-fat sour cream, in which the texture and creaminess of the low-fat sour cream is as close as possible to that of a high fat variety.

The present invention aims to find a solution for at least some of the above problems.

### SUMMARY OF THE INVENTION

To this end, the invention relates to a method for preparing sour cream according to claim 1.

The method comprises a thermization step that is necessary to ensure the long-term shelf life of the product and to induce the protein gelation that ensures the thickening of the cream. Thermization should be done at a temperature higher than 38°C to prevent the solidification of the fat present, mainly butterfat. The solidification of fat causes lumps to form in the sour cream, which is undesirable. At a temperature higher than 68°C, the protein coagulation is complete and unwanted lumps are also formed in the sour cream. Moreover, adding a milk protein source ensures that more proteins can form a gel when heated and in an acidic medium, contributing to the thickening of the sour cream.

By dispersing the product after fermentation, aggregates formed during fermentation will be broken down. The proteins in these aggregates are thus released and can therefore participate maximally in the gel formation during thermization.

Preferred embodiments of the method are set out in claims 2-13.

In a second aspect, the invention relates to sour cream with a fat content between 9 and 16 m% obtained according to a method according to any of claims 1-13.

The sour cream is clean label sour cream with a low fat content, wherein the texture and creaminess of the low-fat sour cream is close to that of a high fat variety without the need to add E numbers.

### DESCRIPTION OF THE FIGURES

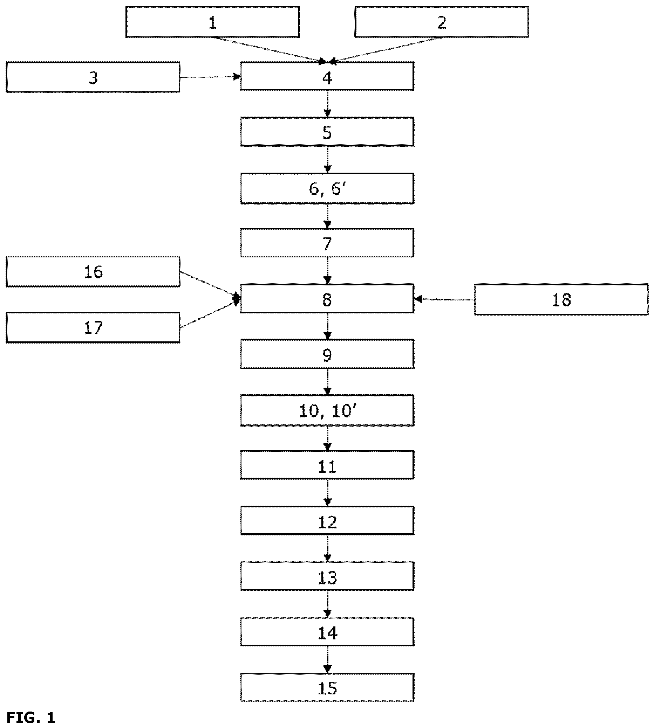

**Figure 1** schematically depicts an embodiment of the present invention. The following numbering refers to:
1: Pasteurized milk fraction
2: Pasteurized cream fraction
3: Skimmed milk powder
4: Mixing and standardizing
5: Homogenizing
6: Pasteurizing
7: Cooling
8: Inoculation
9: Fermenting
10: Dispersing
11:Thermization
12:Cooling
13: Filling and stacking using the open stacking method on pallets
14: Cooling
15:Close piling of pallets and wrapping them for transport
16:Culture comprising *Steptococcus Thermophilus*
17:Butter starter culture comprising *Lactococcus* and *Leuconostoc*
18:Microbial rennet

### DETAILED DESCRIPTION

The invention relates to a method for preparing "clean label" low-fat sour cream.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

The term "m%," as used in the text, is synonymous with "mass%" or "weight%" and refers, unless otherwise defined, to the relative weight of the respective component based on the total weight of the composition or product.

Quoting numerical intervals by endpoints comprises all integers, fractions and/or real numbers between the endpoints, these endpoints included.

In the context of this invention, the term "homogenization" refers to a process in which the particle size of the fat particles in the dairy product is treated in such a way that smaller, uniform fat particles are created that are evenly distributed throughout the dairy product. The particle size is reduced under conditions of extreme pressure, turbulence, acceleration and impact.

The term "starter culture" in the present invention is intended to mean a preparation to aid the start of the fermentation process in the preparation of sour cream. A starter culture is a microbiological culture that actually performs fermentation. A starter culture usually consists of a culture medium that is well colonized by the microorganisms used for the fermentation.

The term "gelling" or "gelation" in the present invention refers to a process in which casein proteins form a network in which water is trapped under the influence of an acidic environment, whereby the liquid product becomes firmer (solidifies) to a gel (after cooling).

The "shelf life" of a product is defined as the period during which a product can be stored without the quality falling below a certain acceptable minimum level. This concept is rather subjective. The physical and chemical limiting factors of shelf life, in the context of the present invention for dairy products, are incipient gelation, increase in viscosity, whey separation, heavy sedimentation and discoloration. The organoleptic limiting factors are deterioration of taste, odor, or color.

In the present invention, the term "protein coagulation" or "coagulation of proteins" refers to a process in which proteins that are dissolved in the product, under the influence of an external agent, such as a reduced pH and/or an elevated temperature, clump together and do not remain in solution.

The term "sour cream" in the present invention refers to a dairy product obtained by fermenting regular cream or a milk/cream mixture with certain types of lactic acid bacteria. The bacterial culture, whether introduced deliberately or naturally, sours and thickens the cream. "Sour cream" includes the dairy products crème fraîche and crème fraîche light.

In the present invention, the term "standardization" refers to a process in which the fat content of a first dairy stream is reduced to a predetermined value by adding a second dairy stream containing a maximum of 0.5 m% milk fat, such as, for example, skimmed milk. Similarly, during standardization the protein content can be increased to a predetermined value by adding a protein-rich stream, such as milk powder, for example. Standardization ensures that the desired or legal amount of milk fat and/or protein is present in a dairy stream before it undergoes further processing steps.

The term "fat content" refers to the amount of milk fat present in a dairy product, calculated on the total product weight. The fat content can be measured, for example, by means of a Fourier-transform infrared measurement (FTIR). The fat content is preferably measured according to ISO 2450:2008|IDF 16:2008.

The term "protein content" refers to the total amount of proteins (i.e. casein proteins + whey proteins) present in a dairy product, calculated on the total product weight. The protein content can be measured, for example, by means of a Fourier-transform infrared measurement (FTIR). The protein content is preferably measured in accordance with ISO 16634-2:2016.

The term "thermization" refers to heating the product to a predetermined temperature and keeping it at that temperature for a predetermined time before cooling back down.

In a first aspect, the invention relates to a method for preparing sour cream with a predetermined fat content comprised between 9 and 16 m%.

According to a preferred embodiment, the method comprises the steps of:
i. providing a pasteurized cream fraction, a pasteurized milk fraction and a milk protein source,
ii. mixing the cream fraction with the milk fraction and the milk protein source until a predetermined fat content and protein content are reached,
iii. homogenizing the product obtained from step ii.,
iv. pasteurizing the product obtained from step iii.,
v. cooling the product obtained from step iv.,
vi. inoculating and fermenting with a starter culture, comprising microorganisms, in the product obtained from step vi., wherein sour cream with the intended fat content is obtained.
viii. thermizing the sour cream at a temperature comprised between 38 and 68°C.

Preferably, the sour cream is thermized at a temperature between 50 and 68°C, more preferably at a temperature between 55 and 68°C, even more preferably at a temperature between 56 and 60°C.

Thermization is necessary to ensure the long-term shelf life of the product and to induce the protein gelation that ensures the thickening of the cream. Thermization should be done at a temperature higher than 38°C to prevent the solidification of the fat present, namely butterfat. The solidification of fat causes lumps to form in the sour cream, which is undesirable. At a temperature higher than 68°C, the protein coagulation is complete and unwanted lumps are also formed in the sour cream.

In an embodiment, thermization is maintained for at least 5 minutes to ensure that the proteins gel sufficiently. In addition, the microorganisms that remain after fermentation are thus eliminated so that continued acidification [in Dutch: doorzuring], i.e. the further acidification of the product after fermentation, is prevented. Likewise, germs and most other microorganisms are eliminated in combination with the acidic environment.

In a preferred form, thermization is maintained for a period of time between 5 and 20 minutes, preferably between 10 and 15 minutes.

The inventors have found that these thermization conditions of the product also guarantee microbial stabilization. By choosing this time/temperature combination, a "weak gel" is formed, which perfectly keeps its shape as long as the deformation force is limited, and can therefore provide maximum water retention, but which deforms very homogeneously and plastically without chunks at higher deformation forces, which is the reason for the much appreciated creaminess.

Thermization is advantageous for the following reasons:
- stopping the fermentation;
- elimination of any post-contamination; and
- gelation of the proteins.

The inventors have found that the temperature during thermization should be limited because in the temperature range 61 - 70°C the milk proteins coagulate at the current pH. At 70°C it is a matter of seconds; at 60°C and below it no longer occurs. The inventors found that a proper balance is necessary to obtain the three benefits mentioned above, without achieving complete protein coagulation.

In a preferred form, the shear forces are limited during thermization. Preferably, a maximum of 50 s⁻¹ shear forces are present on the product during thermization.

Thermization can be carried out with a plate heat exchanger.

The pasteurized cream fraction and the pasteurized milk fraction are prepared from a milk stream, the milk stream being fractionated into a cream fraction and a skimmed milk fraction by means of centrifugal separation. This is a process known to a person skilled in the technical field.

In step ii. the cream fraction is mixed with the milk fraction until a predetermined fat content is reached and mixed with the milk protein source until a predetermined protein content is reached.

According to a preferred form of the present invention, a milk protein source is added during mixing.

Adding a milk protein source increases the protein content of the product. Skimmed milk powder, sodium caseinate or other similar milk protein containing products are all suitable as a milk protein source in the present method. Skimmed milk powder is preferably used. The protein content determines the physicochemical quality of the resulting product, i.e. sour cream in the present invention, as it contributes to the thickening of the sour cream through protein gelation.

The term "skimmed milk powder" in the present invention is intended to mean a product produced from fresh skimmed cow's milk. After the milk has been pasteurized and standardized, it is thickened by evaporation and made into a powder through a spray-drying process.

According to a preferred embodiment, skimmed milk powder is added during mixing until a protein content is reached which is between 3 and 5 m%, preferably between 3.5 and 4.5 m%, more preferably between 3.7 and 4.3 m%.

Preferably, the predetermined protein content depends on the predetermined fat content, with a product having a predetermined fat content between 9 and 11 m%, preferably between 9.5 and 10.5 m%, most preferably around 10 m%, being mixed with the milk protein source, preferably skimmed milk powder, until a protein content is reached between 3.4 and 5 m%, preferably between 3.6 and 4.8 m%, more preferably between 3.8 and 4.6 m%, even more preferably between 4 and 4.4 m%, even more preferably between 4.1 and 4.3 m%, most preferably around 4.2 m%. A product with a predetermined fat content between 14 and 16 m%, preferably between 14.5 and 15.5 m%, most preferably around 15 m%, is preferably mixed with the milk protein source, preferably skim milk powder, until a protein content is reached between 3 and 4.6 m%, preferably between 3.2 and 4.4 m%, more preferably between 3.4 and 4.2 m%, even more preferably between 3.6 and 4 m%, even more preferably between 3.7 and 3.9 m%, most preferably around 3.8 m%.

Sour cream available on the market often only has a maximum protein content of 3%. The increased protein content is necessary so that more proteins can form a gel when heated and in an acidic medium and contribute to the thickening of the sour cream. This also makes the addition of extra thickeners superfluous.

A protein content that is too high leads to a product that is too firm, which is also annoyingly sticky. A protein content that is too low results in a product that is too thin / too wet.

According to an embodiment, the pasteurization continues at a temperature comprised between 100 and 110°C, preferably between 103 and 107°C. According to a further embodiment, the pasteurization is maintained between 400 and 500 s, preferably between 430 and 480 s, more preferably between 450 and 470 s.

Pasteurization provides a sterile medium for when the starter culture is inoculated. Moreover, pasteurization ensures minimal cross-linking of the beta-lactoglobulins present in the milk (three-dimensional cross-linking through the thiol groups in the protein to form disulfide bridges).

Prior to pasteurization, the product is homogenized in an embodiment. According to a preferred form, the homogenization continues at a temperature comprised between 50 and 75°C and a pressure comprised between 95 and 125 bar. Preferably, the pressure during homogenization depends on the predetermined fat content, wherein a product with a predetermined fat content of between 9 and 11 m%, preferably between 9.5 and 10.5 m%, most preferably about 10 m%, is homogenized at a pressure comprised between 115 and 125 bar, preferably between 116 and 124, more preferably between 117 and 123, even more preferably between 118 and 122, even more preferably between 119 and 121 bar, most preferably about 120 bars. A product with a predetermined fat content between 14 and 16 m%, preferably between 14.5 and 15.5 m%, most preferably about 15 m%, is preferably homogenized at a pressure between 95 and 105 bar, preferably between 96 and 104, more preferably between 97 and 103, even more preferably between 98 and 102, even more preferably between 99 and 101 bar, most preferably about 100 bar.

According to another preferred embodiment, the homogenization from step iii. and the pasteurization from step iv. are carried out simultaneously on the product, i.e. in a facility that performs all steps in a single operation.

The (high pressure) homogenization is advantageous because the size of the cream particles is reduced, and thus the total surface is increased, which greatly increases the interactions with other molecules.

According to an embodiment, the product is inoculated with a starter culture during inoculation containing one or more lactic acid-producing microorganisms selected from the list of: *Lactobacillus, Streptococcus, Bifidobacterium, Leuconostoc* en/of *Lactococcus.*

According to a preferred embodiment, a combination is inoculated of a culture comprising *Streptococcus thermophilus* and butter starter-like cultures such as *Lactococcus* and *Leuconostoc,* more specifically *Lactococcus lactis ssp. Lactis, Lactococcus lactis ssp. Cremoris, Lactococcus lactis ssp. Lactis* biovar *diacetylactis, Leuconostoc ssp.*

The combination of these types of microorganisms ensures more thickening in the end product, with *Streptococcus thermophilus* providing good acidification and rapid extra thickening of the cream. *Streptococcus thermophilus* grows optimally between 34 and 45°C and dies above 50°C. The butter starter-like cultures *Lactococcus* and *Leuconostoc* ensure a strong taste development. *Lactococcus and Leuconostoc* grow optimally between 25°C and 35°C and die above 39°C.

According to an embodiment, the starter culture comprises the culture comprising *Streptococcus thermophilus* and the butter starter-like culture in a ratio by mass of at least 0.5/1, preferably at least 1/1, more preferably at least 2/1, most preferably about 2/1.

According to another or further embodiment, the starter culture comprises the culture comprising *Streptococcus thermophilus* and the butter starter-like culture in a ratio by mass of between 0.5/1 and 4/1, preferably between 1/1 and 3/1, more preferably between 1.5/1 and 2.5/1, most preferably between 1.8/1 and 2.2/1.

Preferably, the starter culture is a lyophilized starter culture in which the microorganisms have been frozen and dried under vacuum at very low temperatures. Lyophilization stabilizes the cultures for long-term storage while minimizing the damage that can be caused by strict drying of the culture. Many microorganisms survive well when lyophilized and can be easily rehydrated and grown in culture media after prolonged storage.

In the present invention, the term "inoculation" refers to a process whereby microorganisms, often in the form of a starter culture, are placed on a culture medium in order to multiply. In the present invention, the culture medium is the product obtained from step v. The starter cultures subsequently grow to a sufficient quantity, after which they can perform biochemical conversions (e.g., acidification through the production of lactic acid from glucose).

According to an embodiment, the product obtained from step iv. is cooled to a predetermined fermentation temperature prior to inoculation. The fermentation temperature is the temperature at which the fermentation will then continue. The fermentation temperature is intended for optimal growth of the microorganisms that are inoculated into the product prior to fermentation. According to a preferred form, the cooling in step v. continues until a temperature of between 35 and 37°C is reached in the product. As described above, the microorganisms that are inoculated grow optimally in this temperature range.

Inoculation preferably takes place with 0.5 and 5 m%, more preferably 1 to 2 m% starter culture.

Inoculation is done in an alternative preferred form with the starter culture in an amount of 5 to 50 UC/1000L starter culture per product obtained from step v., more preferably in an amount of 10 to 22 UC/1000L.

According to an embodiment, the culture comprising *Streptococcus thermophilus* is inoculated in an amount of 5 to 50 UC/1000L starter culture per product obtained from step v., more preferably in an amount of 7 to 15 UC/1000L.

In another or further embodiment, the butter starter-like culture is inoculated in an amount of 2 to 20 UC/1000L starter culture per product obtained from step v., more preferably in an amount of 3 to 8 UC/1000L.

The term "UC" means "unit counts." 10 UC/1000 L acidifies the milk from pH 6.8 to pH 4.6 in 8 hours at ideal temperature.

According to an embodiment, during inoculation, rennet or protein-splitting enzymes are added, such as chymosin and/or pepsin, preferably microbial rennet is added. Microbial rennet comprises a proteolytic enzyme (protease). Microorganisms produce various substances during their growth, including protein-splitting enzymes. The fungus Rhizomucor miehei, for example, naturally produces a protease that is very similar in properties to chymosin. Rennets made using Rhizomucor miehei are marketed under the brand names Milase, Hannilase and Fromase. The protein-splitting enzymes enzymatically ensure that more casein proteins are available for gelation by releasing them. An example of a dosage is (25 IMCU/I ±10%; IMCU = clotting capacity according to ISO 15174 IDF 176:2012; derived from Rhizomucor miehei).

According to an embodiment, the fermentation continues for a period of time comprised between 10 and 16 hours.

According to a preferred embodiment, the fermentation continues until a pH of between 4.2 and 4.4 is reached in the product. A pH between 4.2 and 4.4 inhibits most microorganisms, but a pH higher than 4.4 does not. For example, *Listeria* will not grow at a pH lower than or equal to 4.4 but will grow at a pH higher than 4.4.

During the first phase of the fermentation, for example as long as the fermentor is not yet completely filled, the product can also be stirred. Afterwards, stirring can be stopped so as not to disturb the fermentation.

According to an embodiment, the method further comprises the step of:
vii. dispersing the product obtained from step vi.

By dispersing the product after fermentation, aggregates formed during fermentation will be broken down. The proteins in these aggregates are thus released and can therefore participate maximally in the gel formation during thermization.

Good gel formation should be induced without lumps (including microscopic ones), which means that a smoothing step is preferably required between fermentation and thermization. Smoothing by dispersing will ensure that any lumps present are prevented from hardening due to pasteurization, so that less protein is available to participate in the gel formation. The result is harder lumps in a weaker gel. To prevent this, it is advantageous to smooth the fermented white mass by means of dispersion.

According to a further embodiment, the dispersion is carried out by means of a shear pump at a frequency comprised between 9 and 16 Hz. Preferably, the frequency depends on the predetermined fat content, wherein a product with a predetermined fat content comprised between 9 and 11 m%, preferably between 9.5 and 10.5 m%, most preferably about 10 m%, is dispersed at a frequency comprised between 9 and 11 Hz, preferably between 9.2 and 10.8 Hz, more preferably between 9.4 and 10.6 Hz, even more preferably between 9.6 and 10.4 Hz, even more preferably between 9.8 and 10.2 Hz, even more preferably between 9.9 and 10.1 Hz, and most preferably about 10 Hz. A product with a predetermined fat content of 14 and 16 m%, preferably between 14.5 and 15.5 m%, most preferably about 15 m%, is dispersed at a frequency comprised between 14 and 16 Hz, preferably between 14.2 and 15.8 Hz, more preferably between 14.4 and 15.6 Hz, even more preferably between 14.6 and 15.4 Hz, even more preferably between 14.8 and 15.2 Hz, even more preferably between 14.9 and 15.1 Hz, most preferably about 15 Hz.

According to an embodiment, the method further comprises the steps of:
ix. cooling the product obtained from step viii. until a temperature is reached in the product which is between 38 and 42°C, and
x. filling the product obtained from step ix.

The filling of the product into a packaging must take place at a temperature higher than 38°C, because below this temperature coagulation of the butterfat occurs. If coagulation takes place during filling and therefore while the product is in motion, lumps will form in the final product, which is undesirable.

Preferably, filling takes place at a temperature between 38 and 41°C. At filling temperatures above 41°C, condensation will form against the inside of the cover foil of the packaging, so that the effect for consumers appears to be the same as with whey separation, which is undesirable. With a filling below 38°C, lumps will form in the sour cream and the smoothness of the sour cream cannot be guaranteed.

The filling preferably takes place in sterilized beakers. The beakers may contain different amounts of product such as, for example, but not limited to 125 g, 200 g, 250 g and 500 g.

According to a further embodiment, after filling the product is cooled, unwrapped (i.e. in open trays, stacked on a pallet that is not wrapped with stretch wrap, so that the air flow in the cooling unit can ensure a very rapid cooling of the product to below 12°C) using forced or non-forced air flows in a cooling unit so that the product can continue to thicken in the packaging. Preferably, after a minimum of three days, the pallet is wrapped with stretch wrap that makes transport of the pallet possible. After three days the product has thickened sufficiently in the packaging under the influence of the cold air. If the stretch wrap is placed around the pallet earlier, the product will not make sufficient contact with the cool airflow and the solidifying or thickening of the product in the packaging under the influence of the cooling will take too long or will not be fully carried out.

The cooling ensures the final thickening in the filling containers and must be done quickly enough. The inventors found that this cooling process is necessary due to the thickness of the product. After this the product is strong enough to be transported without damage to the structure or change of other properties.

According to a preferred embodiment, no modified starches, stabilizers and thickeners are added. The addition of these additives is not necessary because the thickening of the product is ensured by the gelling of the proteins. This is important for obtaining a so-called "clean label" sour cream. Clean label food products are food products where the label is free of E numbers. Modified starch is any starch that has been processed in a way, such as E1400 dextrin, E1401 acid-treated starch, E1402 alkali-treated starch, E1403 bleached starch, E1404 oxidized starch, E1410 monostarch phosphate, E1411 distarch glycerol, E1412 distarch phosphate, E1413 phosphated distarch phosphate, E1414 acetylated distarch phosphate, E1420 acetylated starch, E1422 acetylated distarch adipate, E1423 acetylated distarch glycerol, E1440 hydroxypropyl starch, E1441 hydroxypropyl distarch glycerol, E1442 hydroxypropyl distarch phosphate, E1450 starch sodium octenyl succinate, E1451 acetylated oxidized starch and/or E1452 starch aluminum octenyl succinate. Stabilizers are substances primarily capable of binding water and include locust bean gum, guar gum, tragacanth, gum arabic, xanthan gum, gum arabic, alginates, such as sodium, potassium, ammonium, calcium, and propylene glycol alginate, cellulose gum, carrageenan. Thickeners make the product firmer (a kind of binder). Thickeners include E400 alginic acid, E401 sodium alginate, E402 potassium alginate, E403 ammonium alginate, E404 calcium alginate, E405 propylene glycol alginate, E406 agar agar, E407 carrageenan and/or furcelleran, E410 locust bean gum, E412 guar gum, E413 traganth, E414 gum arabic, E415 xanthan, E416 Karaya (Indian tragacanth), E417 tara gum, E418 gellan, E440 pectin and/or opekta, E440ii amidated pectin, E441 gelatin, E460 microcrystalline cellulose and/or cellulose powder, E461 methylcellulose, E462 ethylcellulose, E463 hydroxypropylcellulose, E465 methylethylcellulose, E466 carboxymethylcellulose and/ or sodium carboxymethylcellulose, or combinations thereof.

A specific preferred form of the invention relates to a method for preparing sour cream comprising a predetermined fat content between 9 and 16 m%, comprising the steps of:
i. providing a pasteurized cream fraction, a pasteurized milk fraction and a milk protein source,
ii. mixing the cream fraction with the milk fraction and the milk protein source until a predetermined fat content and protein content are reached, achieving a protein content comprised between 3 and 5%,
iii. homogenizing the product obtained from step ii.,
iv. pasteurizing the product obtained from step iii.,
v. cooling the product obtained from step iv.,
vi. inoculating and fermenting a starter culture in the product obtained from step vi., obtaining sour cream with a predetermined fat content, and
characterized in that the method comprises the steps of:
vii. dispersing the product obtained in step vi. by means of a shear pump at a frequency comprised between 9 and 16 Hz, and
viii. thermizing the sour cream at a temperature comprised between 38 and 68°C, preferably between 50 and 68°C, more preferably between 50 and 60°C, even more preferably between 56 and 60°C.

In a second aspect, the invention relates to a sour cream.

According to a preferred embodiment, the sour cream has a fat content between 9 and 16 m% and an increased protein content, preferably a protein content between 3 and 5 m%, more preferably between 3.5 and 4.5 m%, even more preferably between 3.7 and 4.3 m%.

According to a preferred form, the sour cream has a fat content between 9 and 16 m%. According to a further preferred form, the sour cream has a fat content comprised between 9 or 11 m%, preferably comprised between 9.1 and 10.9 m%, more preferably comprised between 9.2 and 10.8 m%, more preferably comprised between 9.3 and 10.7 m%, more preferably comprised between 9.4 and 10.6 m%, even more preferably comprised between 9.5 and 10.5 m%, even more preferably comprised between 9.6 and 10.4 m%, even more preferably between 9.7 and 10.3 m%, even more preferably between 9.8 and 10.2 m%, even more preferably between 9.9 and 10.1 m%, and most preferably about 10 m%. According to another further preferred form, the sour cream has a fat content comprised between 14 or 16 m%, preferably comprised between 14.1 and 15.9 m%, more preferably comprised between 14.2 and 15.8 m%, more preferably comprised between 14.3 and 15.7 m%, more preferably comprised between 14.4 and 15.6 m%, even more preferably comprised between 14.5 and 15.5 m%, even more preferably comprised between 14.6 and 15.4 m%, even more preferably between 14.7 and 15.3 m%, even more preferably between 14.8 and 15.2 m%, even more preferably between 14.9 and 15.1 m%, and most preferably about 15 m%.

Preferably, the protein content of the sour cream depends on the fat content, with a sour cream having a fat content between 9 and 11 m%, preferably between 9.5 and 10.5 m%, most preferably about 10 m%, preferably having a protein content comprised between 3.4 and 5 m%, preferably between 3.6 and 4.8 m%, more preferably between 3.8 and 4.6 m%, even more preferably between 4 and 4.4 m%, even more preferably between 4.1 and 4.3 m%, most preferably around 4.2 m%. A sour cream with a fat content comprised between 14 and 16 m%, preferably between 14.5 and 15.5 m%, most preferably about 15 m%, preferably has a protein content comprised between 3 and 4.6 m%, preferably between 3.2 and 4.4 m%, more preferably between 3.4 and 4.2 m%, even more preferably between 3.6 and 4 m%, even more preferably between 3.7 and 3.9 m%, most preferably around 3.8 m%.

The fat content is preferably measured according to ISO 2450:2008|IDF 16:2008. The protein content is preferably measured in accordance with ISO 16634-2:2016.

In a preferred form, the sour cream has been obtained by a method according to the first aspect of the present invention.

According to a further preferred form, the sour cream has no modified starches, stabilizers or thickeners.

The obtained sour cream is characterized by the absence of modified starches, stabilizers and thickeners in the product. The addition of these additives, despite the low fat content, is not necessary because the thickening of the product is ensured by the gelling of the proteins. This is important for obtaining a so-called "clean label" sour cream. The sour cream is clean label sour cream with a low fat content, wherein the texture and creaminess of the low-fat sour cream is close to that of a high fat variety without the need to add E numbers.

According to a preferred embodiment, the whey separation in the sour cream after 10 days after filling amounts to a maximum of 2 vol%. Vol% means the volume percentage relative to the total volume of sour cream.

According to a preferred embodiment, the whey separation in the cooking cream after 90 days after filling amounts to a maximum of 2 vol%. With 90 days, 90 days after filling of the product is intended.

A specific embodiment of the invention relates to a sour cream, wherein the sour cream has a fat content between 9 and 16 m%, and a protein content between 3 and 5 m%, and wherein the whey separation in the sour cream after 90 days after filling is a maximum of 2 vol% of the total volume of sour cream.

A further specific embodiment of the invention relates to a sour cream, wherein the sour cream has a fat content between 9 and 16 m%, and a protein content comprised between 3 and 5 m%, wherein the sour cream does not contain modified starches, stabilizers and thickeners, and wherein the whey separation in the sour cream after 90 days after filling is a maximum of 2 vol% of the total volume of sour cream.

The sour cream has the following advantages: the sour cream is easy to spoon: good "scoop", very short, firm but not lumpy; in hot applications, the sour cream melts sufficiently quickly, without lumps, without leaving a slow-melting core, but with sufficiently rapid increases in whitening and thickening; in cold applications mixing with ingredients to homogeneity is smooth, without lumps and without loss of thickness. Water retention is also and will be maintained during use. The thus formed weak protein gel with solidified fat droplets in between, without additives not only has good water retention, but also thickening, solid scoop, good hot melt, good cold miscibility, adhesion in dipping sauces and so on. In addition, the product retains these properties excellently (over time, when mixed, in application, etc.).

In what follows, the invention is described by way of non-limiting figures and examples illustrating the invention, and which are not intended to and should not be interpreted as limiting the scope of the invention.

### EXAMPLES

### Example 1: Sour cream with fat content of 10 m%

Example 1 concerns the preparation of sour cream with a fat content of about 10 m% according to a preferred form of the present invention, as shown in **Figure 1****.** A pasteurized cream fraction **2** is mixed **4** with a pasteurized milk fraction **1** until a fat content of 10 m% is reached. In this way, the product is standardized, whereby this step must ensure that the desired or legal amount of milk fat is present. Skimmed milk powder **3** is also added during mixing **4** in order to increase the protein content to a protein content of between 4.1 and 4.3 m%, so that the protein content is adapted to the fat content of the sour cream and its firmness to be achieved.

Subsequently, the product obtained after mixing is homogenized **5** at about 120 bar and pasteurized **6** for about 460 seconds at a temperature of 105°C. Approximately 8500 L per hour is pasteurized. The product obtained is cooled for a first time **7** to a temperature between 35 and 37°C, after which a culture comprising *Steptococcus Thermophilus* **16** and a butter starter culture comprising *Lactococcus* and *Leuconostoc* **17** are inoculated **8** into the product. The cultures are added in a 2/1 ratio. Microbial rennet **18** is also added to the product. During inoculation **8** or until shortly afterwards (maximum 30 minutes), the product is stirred. The product then undergoes fermentation **9** for a period of time between 10 and 16 hours and continues until the pH of the product is between 4.4 and 4.2.

The product is dispersed **10** in a shear pump operating at a frequency of 10 Hz. Subsequently, the product is thermized **11,** whereby the product is heated to a temperature of 58°C for a minimum of 5 minutes. Afterwards the product is cooled a second time **12** to a temperature between 38 and 42°C and filled into beakers and stacked using the open stacking method on pallets **13.** The beakers are further cooled in open trays on an unwrapped pallet **14** and the pallet is close stacked after a minimum of three days and wrapped **15** with a stretch wrap.

According to this embodiment, no modified starches, stabilizers or thickeners are added.

### Example 2: Sour cream with fat content of 15 m%

Example 2 concerns the preparation of sour cream with a fat content of 15 m% according to a preferred form of the present invention carried out according to the same method as described in Example 1, but with the following differences indicated by "'" in **Figure 1****.**

A pasteurized cream fraction **2** is mixed **4** with a pasteurized milk fraction **1** until a fat content of 15 m% is reached, and skimmed milk powder is added **3** until a protein content between 3.7 and 3.9 m% is reached.

Homogenization **6'** of the product obtained after mixing continues at about 100 bars.

Dispersing **10'** of the product obtained after fermentation in a shear pump operating at a frequency of 15 Hz.

### Examples 3-14 and Comparative Examples 15-16: Thermization

Examples 3-14 and Comparative Examples 15-16 concern the preparation of sour cream with a fat content of about 10 m% and about 15 m%. A pasteurized cream fraction is mixed with a pasteurized milk fraction until a fat content of 10 m% or 15 m% is reached. In this way, the product is standardized, whereby this step must ensure that the desired or legal amount of milk fat is present. Skimmed milk powder is also added during mixing to increase the protein content to a protein content between 4.1 and 4.3 m%, or a protein content between 3.7 and 3.9 m%, so that the protein content is adapted to the fat content of the sour cream and its firmness to be achieved.

Subsequently, the product obtained after mixing is homogenized at about 120 bar and pasteurized for about 460 seconds at a temperature of 105°C. Approximately 8500 L per hour is pasteurized. The product obtained is cooled for a first time to a temperature between 35 and 37°C, after which a culture comprising *Steptococcus Thermophilus* and a butter starter culture comprising *Lactococcus* and *Leuconostoc* are inoculated into the product. The cultures are added in a 2/1 ratio. Microbial rennet is also added to the product. During inoculation or until shortly afterwards (maximum 30 minutes), the product is stirred. The product then undergoes fermentation for a period of time between 10 and 16 hours and continues until the pH of the product is between 4.4 and 4.2.

In a further step, the product obtained was thermized at a temperature of 50°C (Examples 3 and 9), thermized at a temperature of 56°C (Examples 4 and 10), thermized at a temperature of 58°C (Examples 5 and 11), thermized at a temperature of 60°C (Examples 6 and 12), thermized at a temperature of 61°C (Examples 7 and 13), thermized at a temperature of 69°C (Comparative Examples 8 and 14) and not thermized (Comparative Examples 15 and 16). During the thermization, the product was heated to the predetermined temperature for a period of 12 minutes by means of a plate heat exchanger. The results can be found in Table 1.

The inventors discovered that a thermization at a temperature of 69°C caused clot formation in the sour cream within a few seconds. This is due to the acceleration of the coagulation of the milk proteins at the current pH due to the high temperature. The inventors discovered that a thermization at a temperature of 61°C also caused clot formation in the sour cream, being only light. It was found that coagulation no longer occurs below 60°C. In addition, a maximum temperature lower than 68°C is desirable to maintain a safe margin with respect to complete protein coagulation.

The inventors discovered that the absence of a thermization, i.e. a temperature lower than 38°C, caused clot formation in the sour cream. This is due to the solidification of the milk fat (mainly butterfat). In addition, the absence of the thermization means that it is difficult to stop the fermentation; that possible post-contamination cannot easily be eliminated; and that the gelation of the proteins is difficult, as a minimum temperature is required for this.

Furthermore, the inventors found that a temperature of at least 56°C was advantageous to thermally coagulate the proteins.

**TABLE 1**

| | Fat content | Protein content | Thermization? | Clot formation? |
|---|---|---|---|---|
| Example 3 | 10 m% | 3.7 - 3.9 m% | Yes, 50°C | No, but insufficient protein coagulation |
| Example 4 | 10 m% | 3.7 - 3.9 m% | Yes, 56°C | No |
| Example 5 | 10 m% | 3.7 - 3.9 m% | Yes, 58°C | No |
| Example 6 | 10 m% | 3.7 - 3.9 m% | Yes, 60°C | No |
| Example 7 | 10 m% | 3.7 - 3.9 m% | Yes, 61°C | Yes, light |
| Example 8 | 10 m% | 3.7 - 3.9 m% | Yes, 69°C | Yes, within a few seconds |
| Example 9 | 15 m% | 3.7 - 3.9 m% | Yes, 50°C | No, but insufficient protein coagulation |
| Example 10 | 15 m% | 3.7 - 3.9 m% | Yes, 56°C | No |
| Example 11 | 15 m% | 4.1 - 4.3 m% | Yes, 58°C | No |
| Example 12 | 15 m% | 4.1 - 4.3 m% | Yes, 60°C | No |
| Example 13 | 15 m% | 4.1 - 4.3 m% | Yes, 61°C | Yes, light |
| Example 14 | 15 m% | 4.1 - 4.3 m% | Yes, 69°C | Yes, within a few seconds |
| Comparative Example 15 | 10 m% | 3.7 - 3.9 m% | No | Yes |
| Comparative Example 16 | 15 m% | 4.1 - 4.3 m% | No | Yes |

### Examples 17-18 and Comparative Examples 19-20: Dispersing

Examples 17-18 and Comparative Examples 19-20 concern the preparation of sour cream with a fat content of about 10 m% and 15 m%. A pasteurized cream fraction is mixed with a pasteurized milk fraction until a fat content of 10 m% or 15 m% is reached. In this way, the product is standardized, whereby this step must ensure that the desired or legal amount of milk fat is present. Skimmed milk powder is also added during mixing to increase the protein content to a protein content between 4.1 and 4.3 m%, or a protein content between 3.7 and 3.9 m%, so that the protein content is adapted to the fat content of the sour cream and its firmness to be achieved.

Subsequently, the product obtained after mixing is homogenized at about 120 bar and pasteurized for about 460 seconds at a temperature of 105°C. Approximately 8500 L per hour is pasteurized. The product obtained is cooled for a first time to a temperature between 35 and 37°C, after which a culture comprising *Steptococcus Thermophilus* and a butter starter culture comprising *Lactococcus* and *Leuconostoc* are inoculated into the product. The cultures are added in a 2/1 ratio. Microbial rennet is also added to the product. During inoculation or until shortly afterwards (maximum 30 minutes), the product is stirred. The product then undergoes fermentation for a period of time between 10 and 16 hours and continues until the pH of the product is between 4.4 and 4.2.

In a further step, the obtained product was dispersed with a high shear pump controlled at a frequency of 10 Hz (example 17) and 15 Hz (example 18), and not dispersed (Comparative Examples 19 and 20). The results can be found in Table 2.

The inventors discovered that a dispersion step ensures that the protein aggregates formed after fermentation can be reduced in size. These protein aggregates can later lead to a reduced gelation of the proteins because fewer proteins are available. This is especially important with low-fat sour cream because fewer fat droplets are present to limit protein aggregate size and its firmness.

This is especially advantageous if the dispersion step is combined with the thermization step. The aggregates present after fermentation would become even harder during thermization, resulting in harder lumps in a weaker gel. Smoothing the sour cream by dispersing before thermization could solve this problem.

**TABLE 2**

| | Fat content | Protein content | Dispersing | Clot formation? |
|---|---|---|---|---|
| Example 17 | 10 m% | 4.1 - 4.3 m% | Yes, 10 Hz | No |
| Example 18 | 15 m% | 3.7 - 3.9 m% | Yes, 15 Hz | No |
| Comparative Example 19 | 10 m% | 4.1 - 4.3 m% | No | Aggregates |
| Comparative Example 20 | 15 m% | 3.7 - 3.9 m% | No | Aggregates |

After thermization, hard lumps formed in the non-dispersed products, while the dispersed products still showed no clot formation after thermization.

### Comparative Example 21 and Example 22: Commercial market product

### Shelf life and taste tests

A commercial product with fat content between 9 and 16 m%, prepared without dispersion step and thermization step as described above, (comparative example 21) is subjected to a taste evolution test:
- From about one week onwards, the commercial product is already clearly more acidified than during production;
- From about two weeks onwards, the taste of the commercial product starts to show a clear bitterness and, due to the further increasing continued acidification, the typical taste of fresh cream disappears to make way for a bitter-sour product.
- Between 3 and 4 weeks, the bitterness makes the typical market product unacceptable to consumers.

A product obtained according to an embodiment of the current method with dispersion step and thermization step (Example 22) still does not show the above taste defects after 90 days. The inventors found that no taste evolution could be established, neither in terms of bitterness nor sourness. The typical taste of fresh cream remained for 90 days.

### Whey separation

With the commercial product, during storage during the first 2 to 4 weeks, a limited but clearly visible whey separation occurs. For consumers, this comes across as "unstable" or "product out of date" and is therefore undesirable. Moreover, the addition of water absorbers and stabilizers, such as gums (guar gum, locust bean gum, xanthan gum, etc.) or starch (usually modified starch) to reduce whey separation is also not desired by consumers.

A product obtained according to an embodiment of the current method does not show the above whey separation, without additives and without the adverse consequences: the product has a small amount of condensate formed after cooling without additional whey separation in market samples with a 90-day guarantee.

## Claims

1. A method for preparing sour cream comprising a predetermined fat content between 9 and 16 m%, comprising the steps of:
i. providing a pasteurized cream fraction, a pasteurized milk fraction and a milk protein source,
ii. mixing the cream fraction with the milk fraction and the milk protein source until a predetermined fat content and protein content are reached, achieving a protein content comprised between 3 and 5%,
iii. homogenizing the product obtained from step ii.,
iv. pasteurizing the product obtained from step iii.,
v. cooling the product obtained from step iv.,
vi. inoculating and fermenting a starter culture in the product obtained from step vi., obtaining sour cream with a predetermined fat content, and
**characterized in that** the method comprises the steps of:
vii. dispersing the product obtained in step vi. by means of a shear pump at a frequency comprised between 9 and 16 Hz, and
viii. thermizing the sour cream at a temperature comprised between 38 and 68°C.

2. Method according to claim 1, wherein skimmed milk powder is added as a source of milk protein during mixing until a protein content of between 3 and 5% is reached.

3. Method according to any of the preceding claims, wherein the thermization of the sour cream continues at a temperature comprised between 50 and 68°C, preferably comprised between 50 and 60°C, even more preferably comprised between 56 and 60°C.

4. Method according to any of the preceding claims, wherein the fermentation continues until a pH of between 4.2 and 4.4 is reached in the product.

5. Method according to any of the preceding claims, wherein the cooling in step v. continues until a temperature of between 35 and 37°C is reached in the product.

6. Method according to any of the preceding claims, wherein the method further comprises the steps of:
ix. cooling the product obtained from step viii. until a temperature is reached in the product which is between 38 and 42°C, and
x. filling the product obtained from step ix.

7. Method according to claim 6, wherein the cooling of the product obtained from step viii. continues until a temperature is reached in the product that is between 38 and 41°C.

8. Method according to any of the preceding claims, wherein the homogenization continues at a pressure comprised between 95 and 125 bar.

9. Method according to any of the preceding claims, wherein the pasteurization continues at a temperature comprised between 100 and 110°C.

10. Method according to any of the preceding claims, wherein no modified starches, stabilizers and thickeners are added.

11. Method according to any of the preceding claims, wherein a protease enzyme is added during inoculation.

12. Method according to any of the preceding claims, wherein the thermization is maintained for at least 5 minutes.

13. Method according to any of the preceding claims, wherein the pasteurization is maintained for between 400 and 500 s.

14. A sour cream, wherein the sour cream has a fat content between 9 and 16 m%, and a protein content comprised between 3 and 5 m%, **characterized in that** the sour cream does not comprise modified starches, stabilizers and thickeners, and wherein the whey separation in the sour cream after 90 days after filling is a maximum of 2 vol% of the total volume of sour cream.

15. Sour cream according to claim 14 obtained by means of a method according to any of claims 1-13.
